# EUROPEAN PATENT APPLICATION

(11) **EP 4 372 661 A1**
(43) Date of publication of application: **22.05.2024**
(21) Application number: 22841550.1
(22) Date of filing: 13.07.2022
(51) Int. Cl.: G06Q 50/10

(54) **DIGITAL SERVICE MANAGEMENT SYSTEM**

(30) Priority: 13.07.2021 ES 202130659
(71) Applicant: ARPPA Technologies, S.L., 33011 OVIEDO (Asturias) (ES)
(72) Inventor: JUNCEDA MORENO, Eladio Francisco, 33011 OVIEDO (Asturias) (ES)
(74) Representative: Herrero & Asociados, S.L.
(86) International application number: PCT/ES2022/070454
(87) International publication number: WO 2023/285723

(57) **Abstract**

System (100) for managing digital services remotely, the system characterized in that it comprises computing means, wherein the computing means comprise a plurality of multi-service terminals (120) configured to offer services to clients, data processing center "CPD" (110) which includes a digital switchboard; and a set of computers (130) located remotely and managed by operators of said digital services, wherein said computing means are in secure wireless communication through a virtual private network "VPN" (160) through the Internet (150), wherein said multiservice terminals (120) are configured to generate automatic video calls with the use of the multiservice terminals (120) by clients requesting one or more specific digital services, and wherein the digital switchboard is configured to distribute the video calls to the computers (130) configured to manage one or more specific digital services.

## Description

### Object of the invention

The object of the present invention relates to a system for remotely managing digital services directed by operators through computing means.

### Background of the invention

The methods for managing basic administrative, commercial and financial transactions, handled by physical persons who perform a job at a commercial or financial establishment, have been threatened by the widespread use of automated teller machines (hereinafter ATM). These types of transactions involve at least two individuals, the worker who provides the service and the client who receives it.

For example, in the financial sector, automated teller machine (ATM) terminals have been widely applied in recent years, this is justified by the increasing number of procedures that can be carried out automatically, canceling the need to have a physical person to manage the operation, reducing the management which is carried out by a single individual (the client) as self-management. Whether in banking, administrative or commercial transactions, these types of devices alter the economy, generating a decrease in physical jobs by automating more and more processes that would previously be carried out by a physical person.

This problem has also meant that with these changes, company users have been affected by the complications that automation processes entail, such as the lack of understanding when carrying out procedures, which is chaotic for users because the communication process is restricted to some commands established by the program in use of these devices. In response to users' demands for greater comfort, controls are becoming more general, canceling specific questions that clients have that ultimately cannot be answered at the same time.

This type of automatic systems have another disadvantage, their connection system is linked directly to the Internet due to the fact that it is cheaper than other connection systems, this type of public networks can be a source of cyber attacks for the company itself because the ATMs are generally computers connected to a network and most of them have outdated operating systems which makes them unprotected from more complex forms of attacks.

The present invention solves the disadvantages present in current automatic systems.

### Description of the invention

The present invention relates to a system for managing digital services remotely through computing means. In particular, said computing means mainly comprise a plurality of multi-service terminals configured to offer services to clients, a data processing center "CPD" that includes, among other elements, a digital switchboard and finally, a set of computers located remotely with respect to the user (and optionally centrally) and managed by operators of said digital services.

The computational media are in secure communication through a virtual private network "VPN" over the Internet. Multi-service terminals are configured to generate automatic video calls with the use of the terminals by clients requesting one or more specific digital services. The digital switchboard is configured to distribute video calls to computers configured to manage specific digital services.

The system for managing digital services remotely according to the present invention can cover the operational needs that arise at a service point in entities in which various types of activities are carried out that require management of procedures that would normally be carried out in person by a human being (the worker providing the service).

The system for managing digital services remotely according to the present invention is based on interactivity in a natural way so that the clients' sensation is as close as possible to that of dealing with a person at the service point, thus avoiding the general rejection of clients towards the use of new self-service technologies and complex automated systems. Furthermore, it is a system that enhances sound and visual resources so that people with different disabilities (hearing and visual and vocal) can use it equally.

The system for managing digital services remotely according to the present invention is structurally and functionally designed to avoid the described disadvantages of ATMs. The system is based on video conferences between the service point terminal or multi-service terminal and the digital services management center (Face Center) where the computers managed by operators are located. The entire process of establishing the video conference is automated; in addition there is a series of applications that allow the transmission of information generated by client queries between the operator's position and the terminal at the service point.

### Description of the drawings

To complement the description that is being made and in order to help a better understanding of the features of the system for managing digital services in accordance with a preferred example of practical implementation thereof, a set of drawings is included as an integral part of said description, wherein, for illustrative and non-limiting purposes, the following has been represented:
Figure 1 shows the system for managing digital services remotely according to the present invention.
Figure 2 shows two types of multiservice terminals according to the present invention.

### Preferred embodiment of the invention

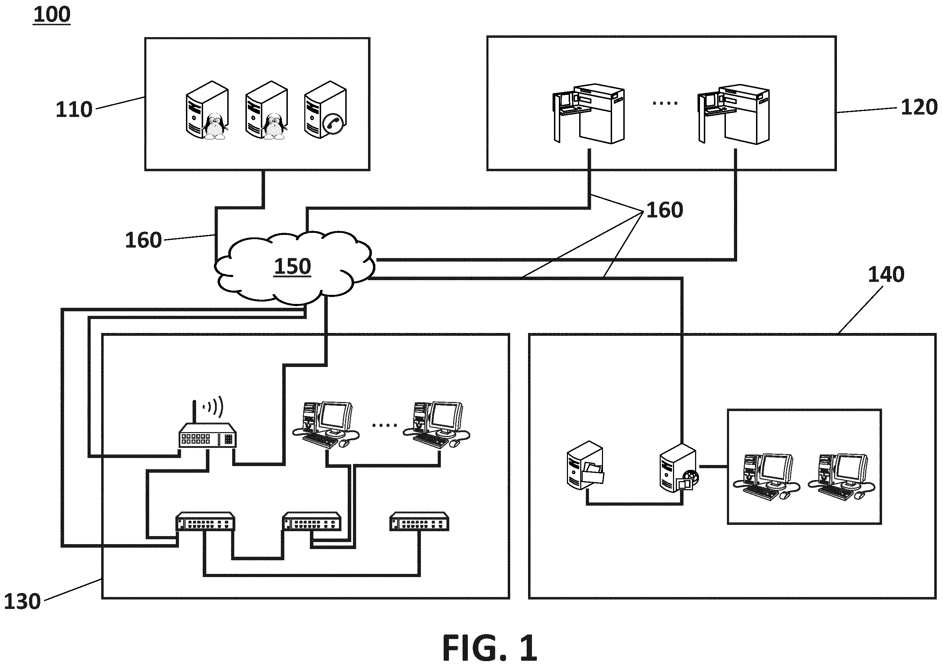

Figure 1 shows the physical architecture (computing means) of the system (100) for managing services remotely in accordance with the present invention. This system (100) comprises a series of multi-service terminals (120) installed in various geographical points, which allow the end user to be served by an operator in real time through a videoconferencing system, supported by a series of peripherals (e.g. screen, screen touch, microphone, speakers, camera, printer, credit card reader) that allow complete interaction between them. The system (100) according to the present invention can facilitate direct, visual, personal and human communication between a user and the operator.

The multiservice terminals (120) are adapted to the provision of client care services that are requested in each case, always through remote agents. These multiservice terminals (120) can be integrated with a wide variety of peripherals, depending on the needs of the sector and the client service being provided. These peripherals may be, in addition to those described above: scanners, webcams, cash devices, printers, signature tablets, weight sensors, motion sensors, blood pressure and pulse meters, temperature meters, height meters, etc.

The computing means also comprise a data processing center "CPD" (110) that includes database servers associated with said services and clients, web and application means and a digital switchboard.

Furthermore, the computing means comprise a set of computers (130) that represent the center for managing digital services managed by the operators of said services. The set of computers (130) are remote with respect to the user and can be distributed in a centralized or delocalized manner.

The computing means are in secure communication through a virtual private network "VPN" (160) through the Internet (150), through a physical or wireless connection. The system (100) bases its operation on a circuit connected through a VPN (160) that allows the computers (130) to be linked to a virtual private network, through a public network, i.e. Internet (150). This VPN network (160) is isolated from the Internet (150) so it is not affected by cyber attacks.

The operators through the computers (130) are in communication through the VPN (160) both to the CPD (110), where the database servers, switchboard and web and application media are located, and with the multi-service terminals (120). In case of carrying out actions on the client's infrastructure, the operators also communicate via the VPN (160) with the client's internal network (140). Through these interconnections, the applications can communicate with each other, the video call can be carried out and the operator can interact remotely with the multi-service terminals (120) physically arranged in user service locations.

The multi-service terminals (120) are configured to generate automatic video calls with the use of the multi-service terminals (120) by clients requesting one or more specific digital services.

The digital switchboard is configured to distribute video calls to the computers (130) of the operators configured to manage the digital services requested by users. Optionally, by means of a button on the screen of the multiservice terminal (120), a video call is automatically generated that is distributed by the digital switchboard among the operators in charge of attending each specific service through the computers (130), managing call queues and automatically assigning said connection to a free operator in use.

The system (100) can carry out complex digital operations such as e.g. banking operations, sales, management and return of tickets in transport companies, requests for information, medical care, and all types of administrative services, among many other procedures that are currently carried out physically in person by the competent companies and organizations.

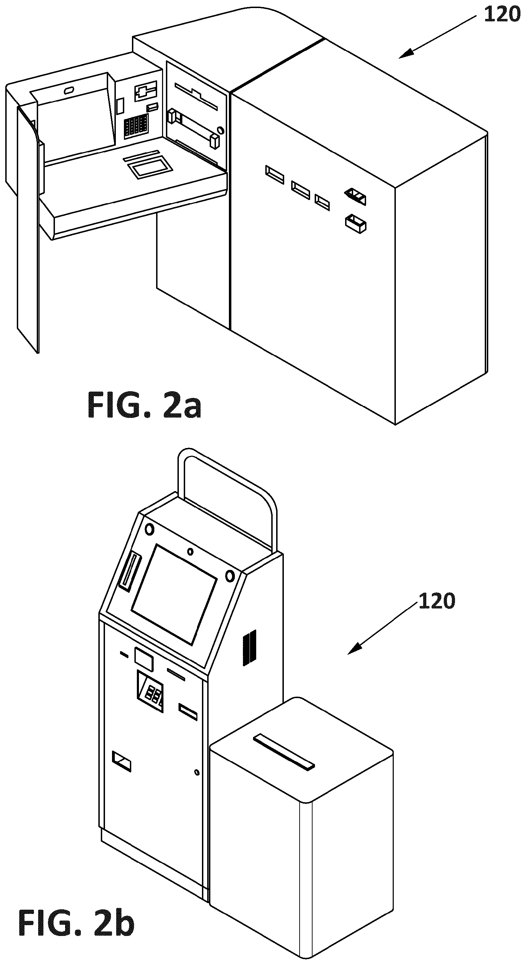

Figure 2 shows two designs of multiservice terminals (120) that have been established among their possible configurations (non-limiting designs of the present invention). The design of the multiservice terminals (120) can be of two types, e.g.: countertop (figure 2a) or pedestal-based (figure 2b), thus adapting to the specific needs of each service and the space available for their location.

The countertop multi-service terminals (120) (figure 2a) are also characterized by being accessible to all types of users (including disabled people), since they include text on the screen, allow the volume to be regulated (thus adapting to the noise existing at any given time and to the specific needs of each client), and make it possible to view explanatory videos on the use of each of the peripherals that comprise it. Furthermore, countertop multi-service terminals (120) (Figure 2a) are accessible to people in wheelchairs, since the countertop multi-service terminal (120) can be configured at different heights, so that it can be accessible to this group.

## Claims

1. System (100) for managing digital services remotely, the system **characterized in that** it comprises computing means,
wherein the computing means include:
- a plurality of multiservice terminals (120) configured to offer digital services to clients;
- data processing center "CPD" (110) that includes a digital switchboard; and
- a set of computers (130) located remotely and managed by operators of said digital services,
wherein said computing means are in secure wired or wireless communication through a virtual private network "VPN" (160) over the Internet (150),
wherein said multiservice terminals (120) are configured to generate automatic video calls with the use of the multiservice terminals (120) by clients requesting one or more specific digital services, and
wherein the digital switchboard is configured to distribute the video calls to the computers (130) configured to manage one or more specific digital services.

2. The system (100) for managing digital services remotely according to claim 1, wherein the data processing center "CPD" (110) further comprises database servers associated with said digital services, and web and application media.

3. The system (100) for managing digital services remotely according to claims 1 or 2, wherein the digital switchboard is configured to access internal networks of the clients (140) to carry out actions on the infrastructures of said clients.

4. System (100) for managing digital services remotely according to claims 1 or 2, wherein the plurality of multiservice terminals (120) comprise one or more of the following peripherals:
screen, touch screen, microphone, speakers, camera, printer, credit card reader, ID reader, scanners, webcam, cash devices, printers, signature tablets, weight sensors, motion sensors, blood pressure and pulse meters, temperature meters or height meters.

5. System (100) for managing digital services remotely according to claims 1 to 4, wherein the plurality of multi-service terminals (120) comprises a countertop design and/or pedestal-based design.

6. System (100) for managing digital services remotely according to the preceding claims, wherein the digital services comprise at least one or more of the following:
banking operations, sale, management and return of tickets in transport companies, requests for information, medical care, or administrative services.
